# EUROPÄISCHE PATENTANMELDUNG

(11) **EP 0 632 565 A1**
(43) Veröffentlichungstag der Anmeldung: **04.01.1995**
(21) Anmeldenummer: 94109444.3
(22) Anmeldetag: 18.06.1994
(51) Int. Cl.: H02K 7/116, B60K 7/00

(54) **Elektrischer Antrieb für ein Kraftfahrzeug**

(30) Priorität: 25.06.1993 DE 4321172
(71) Anmelder: Licentia Patent-Verwaltungs-GmbH, D-60596 Frankfurt (DE)
(72) Erfinder: Oltmanns, Karl-Heinz, D-26123 Oldenburg (DE)
(74) Vertreter: Vogl, Leo, Dipl.-Ing.

(57) **Zusammenfassung**

Ein kompakter und leistungsfähiger elektrischer Antrieb für Kraftfahrzeuge wird erfindungsgemäß dadurch geschaffen, daß der Rotor (19) eines Elektromotors (1) seine Drehung über die Rotorwelle (17) auf ein in einem Getriebegehäuse (21) angeordnetes Getriebe mit einem über Kupplungen schaltbaren Differentialgetriebe (23) überträgt, welches zwei die Vorder- und die Hinterräder des Kraftfahrzeuges über Gelenkwellen antreibende Abtriebswellen (25, 27) aufweist. Hierbei ist eine der Abtriebswellen (25) in der als Hohlwelle ausgebildeten Rotorwelle (17) mittels eines Nadellagers (43) drehbar gelagert.

## Beschreibung

Die Erfindung betrifft einen elektrischen Antrieb für ein Kraftfahrzeug, der im Oberbegriff des Patentanspruchs 1 angegebenen Art.

Elektrische Antriebe sind besonders für im Stadtbetrieb eingesetzte Fahrzeuge sehr geeignet. Die stufenlose Steuerung der Fahrgeschwindigkeit und des Drehmoments im gesamten Fahrbereich erfolgt ohne Schalter durch eine verlustarme Spannungs- und Stromregelung, wobei eine sehr hohe und ruckfreie Beschleunigung erreicht wird. Diese elektrischen Kraftfahrzeugantriebe sind geräuscharm und abgasfrei und daher sehr umweltfreundlich.

Es sind bereits elektrisch angetriebene Kraftfahrzeuge mit einem Elektromotor bekannt, wobei der Rotor seine Drehung über die Rotorwelle auf ein in einem Getriebegehäuse angeordnetes Getriebe mit einem über Kupplungen schaltbaren Differenzialgetriebe bekommt. Dieses Differenzialgetriebe hat zwei Abtriebswellen, welche unter Zwischenschaltung von Gelenkwellen die Vorder- und/oder die Hinterräder des Kraftfahrzeugs antreiben.

Der Erfindung liegt die Aufgabe zugrunde, einen elektrischen Antrieb mit einem Elektromotor für ein Kraftfahrzeug zu schaffen, der kompakt ausgebildet und durch eine gute Kühlwirkung auch leistungsfähig ist. Diese Aufgabe wird durch die im Patentanspruch 1 gekennzeichneten Merkmale gelöst.

Der elektrische Antrieb zeichnet sich durch eine kompakte und leistungsfähige Ausbildung aus, die bei elektrisch anzutreibenden Stadtautos sehr vorteilhaft einsetzbar sind.

Durch die vorteilhafte Ausgestaltung des Erfindungsgegenstandes nach Patentanspruch 7 wird eine sehr wirksame Kühlung des Elektromotors erzielt, wodurch die Betriebstemperaturen selbst bei großen Leistungen niedrig gehalten werden.

Weitere vorteilhafte Ausgestaltungen des Erfindungsgegenstandes sind den weiteren Patentansprüchen zu entnehmen.

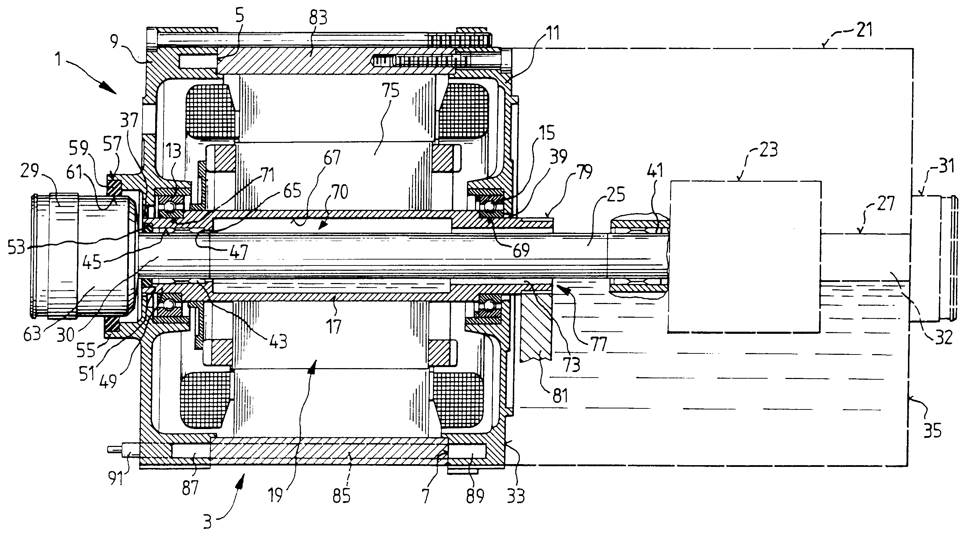

Die Erfindung wird anhand eines in der Figur dargestellten Beispiels im folgenden näher beschrieben.

Die Figur zeigt einen elektrischen Antrieb für ein Kraftfahrzeug mit einem Elektromotor 1, insbesondere mit einem Asynchronmotor, dessen Motorgehäuse 3 an beiden Stirnseiten 5, 7 durch je ein Lagerschild 9, 11 mit je einem Wälzlager 13, 15 zur Aufnahme der Rotorwelle 17 eines Rotors 19 verschlossen ist. Der Rotor 19 überträgt seine Drehung über die Rotorwelle 17 auf ein in einem Getriebegehäuse 21 angeordnetes Getriebe 23, welches nur schematisch angedeutet ist. Dieses Getriebe 23 weist ein über Kupplungen steuerbares Differenzialgetriebe mit zwei Abtriebswellen 25, 27 auf, welche an ihren Enden Kupplungsteile 29, 31 zum Kuppeln mit nicht dargestellten Vorder- bzw. Hinterräder des Kraftfahrzeugs übertragen.

Die beiden Abtriebswellen 25, 27 sind mit ihren die Kupplungsteile 29, 31 tragenden Enden 30, 32 an entgegengesetzten Seitenwänden 33, 35 aus dem Getriebegehäuse 21 herausragbar angeordnet. Die die an dem Motorgehäuse 3 anliegende Seitenwand 33 des Getriebegehäuses 21 durchdringende Abtriebswelle 25 ist durch Öffnungen 37, 39 in den Lagerschilden 9, 11 des Motorgehäuses 3 und durch die als Hohlwelle ausgebildete Rotorwelle 17 durch das Motorgehäuse 3 hindurchgeführt. Hierdurch ergibt sich eine sehr kompakte Anordnung des elektrischen Antriebes.

Die Abtriebswelle 25 trägt an ihrem aus dem Motorgehäuse 3 herausragenden freien Ende 30 das Kupplungsteil 29 für die das Drehmoment auf die Vorder- bzw. Hinterräder übertragende Gelenkwellen. Übrigens ist diese Abtriebswelle 25 einerseits in dem Getriebegehäuse 21 und andererseits in der Rotorwelle 17 mittels als Wälzlager ausgebildeten Nadellagern 41, 43 gelagert. Zu diesem Zweck weist das dem Getriebegehäuse 21 abgewandte Lagerschild 9 eine Lagerausnehmung 45 mit einer Anschlagfläche 47 für das Nagellager 43 auf, wobei das Nadellager 43 und das aus einem Kugellager bestehende Wälzlager 13 konzentrisch zueinander angeordnet ist. Hierdurch wird eine stabile Lagerung für die Abtriebswelle 25 geschaffen. Weiterhin weist die Lagerausnehmung 45 an dem freien Ende 49 der Rotorwelle 17 eine erweiterte, ringförmige Lagerfläche 51 für einen Dichtungsring 53 auf, welcher das Nadellager 43 nach außen sicher abdichtet.

Außerdem ist das dem Getriebegehäuse 21 abgewandte Lagerschild 9 nach außen mit einem hohlzylindrischen Ansatz 55 mit einer ringförmigen Ausnehmung 57 eines Dichtungsrings 59 versehen, welcher mit seiner inneren Dichtungsfläche 61 auf einem zylindrischen Ansatz 63 an dem Kupplungsteil 29 aufliegt. Hierdurch wird das Kugellager 13 nach außen sicher abgedichtet.

Das Nadellager 43 wird mit Öl versorgt, das über einen Ringkanal 65 aus einer Aufnahmekammer 67 zugeführt wird. Diese Aufnahmekammer 67 ist in dem Hohlraum 70 der Rotorwelle 17 zwischen deren durch Eindrehungen gebildeten, endseitigen Lagerflächen 69, 71 angeordnet und steht über einen ringförmigen Verbindungskanal 73 mit dem Öl in dem Getriebegehäuse 21 in Fließverbindung. Hierdurch wird neben dem Schmieren des Nadellagers 43 gleichzeitig auch die in ein dem Rotor 19, insbesondere in dem Rotorblockpaket 75 entstehende Wärme über die dünne Mantelfläche der Rotorwelle 17 und über das in der Aufnahmekammer enthaltene Öl abgeführt. Der Verbindungskanal 73 befindet sich zwischen der Abtriebswelle 25 und dem in das Getriebegehäuse 21 hineinragenden Ende 77 der Rotorwelle 17.

Das Ende 77 der Rotorwelle 17 ist mit einem Antriebsritzel 79 versehen, welches über ein Zahnrad 81 mit dem Differentialgetriebe 23 in Drehverbindung steht. In vorteilhafter Ausgestaltung ist das Antriebsritzel 79 einstückig mit der Rotorwelle 17 ausgebildet.

Die Lagerschilde 9, 11 und das Mantelgehäuse 83 des Motorgehäuses 3 weisen in bekannter Weise Verbindungskanäle 85 und Umlenkkanäle 87, 89 für Kühlwasser auf, welches über einen Zulaufkanal 91 zugeführt und über einen nichtdargestellten Ablaufkanal wieder abgeführt wird. Durch diese Wasserkühlung und durch die zusätzliche Ölkühlung im Rotorbereich wird ein leistungsfähiger, kompakter elektrischer Antrieb für Kraftfahrzeuge geschaffen.

## Patentansprüche

1. Elektrischer Antrieb für ein Kraftfahrzeug mit einem Elektromotor, insbesondere mit einem Asynchronmotor, dessen Motorgehäuse an beiden Stirnseiten durch je ein Lagerschild mit je einem Wälzlager zur Aufnahme der Rotorwelle eines Rotors verschlossen ist, wobei der Rotor seine Drehung über die Rotorwelle auf ein in einem Getriebegehäuse angeordnetes Getriebe mit einem über Kupplungen schaltbaren Differentialgetriebe überträgt, welches zwei die Vorder- und Hinterräder des Kraftfahrzeuges über Gelenkwellen antreibende Abtriebswellen aufweist, dadurch gekennzeichnet, daß die beiden Abtriebswellen (25, 27) mit ihren die Kupplungsteile (29,31) für die Gelenkwellen tragenden Enden (30, 32) an entgegengesetzten Seitenwänden (33, 35) aus dem Getriebegehäuse (21) herausragbar angeordnet sind und daß die die an dem Motorgehäuse (3) anliegende Seitenwand (33) des Getriebegehäuses (21) durchdringende Abtriebswelle (25) durch Öffnungen (37, 39) in den Lagerschilden (9, 11) des Motorgehäuses (83) und durch die als Hohlwelle ausgebildete Rotorwelle (17) durch das Motorgehäuse (3) hindurchgeführt ist und an ihrem aus dem Motorgehäuse (3) herausragenden freien Ende (30) das Kupplungsteil (29) für die Gelenkwelle trägt.

2. Elektrischer Antrieb nach Anspruch 1, dadurch gekennzeichnet, daß die das Motorgehäuse (3) durchdringende Abtriebswelle (25) einerseits in dem Getriebegehäuse (21) und andererseits in der Rotorwelle (17) mittels Wälzlager gelagert sind.

3. Kraftfahrzeug nach Anspruch 2, dadurch gekennzeichnet, daß die Wälzlager aus Nadellagern (41, 43) bestehen.

4. Kraftfahrzeug nach Anspruch 2 oder 3, dadurch gekennzeichnet, daß die mittels Wälzlager (13, 15) in den Lagerschilden (9, 11) gelagerte Rotorwelle (17) an ihrem in dem dem Getriebegehäuse (21) abgewandten Lagerschild (9) eine Lagerausnehmung (45) mit einer Anschlagfläche (47) für das Nadellager (43) aufweist und daß das Nadellager (43) und das Wälzlager (13) konzentrisch zueinander angeordnet sind.

5. Kraftfahrzeug nach Anspruch 4, dadurch gekennzeichnet, daß die Lagerausnehmung (45) an dem freien Ende (49) der Rotorwelle (17) eine erweiterte Lagerfläche (51) für einen Dichtungsring (53) aufweist.

6. Kraftfahrzeug nach Anspruch 5, dadurch gekennzeichnet, daß das dem Getriebegehäuse (21) abgewandte Lagerschild (9) nach außen einen hohlzylindrischen Ansatz (55) mit einer ringförmigen Ausnehmung (57) zur Lagerung eines Dichtungsringes (59) aufweist, welche mit seiner inneren Dichtungsfläche auf einem zylindrischen Ansatz (63) an dem Kupplungsteil (29) aufliegt.

7. Kraftfahrzeug nach einem der vorhergehenden Ansprüche, dadurch gekennzeichnet, daß die Rotorwelle (17) zwischen ihren durch Eindrehungen gebildete endseitigen Lagerflächen (69, 71) eine durch Ausdrehungen gebildete Aufnahmekammer (67) für Öl aufweist, das einerseits über einen Ringkanal (65), dem Nadellager (43) zwecks Schmierung zugeführt wird und das andererseits über einen ringförmigen Verbindungskanal (73), der zwischen der Abtriebswelle (25) und dem verlängerten, in das Getriebegehäuse (21) hineinragenden Ende (77) der Rotorwelle (17) angeordnet ist, mit dem Öl in dem Getriebegehäuse (21) in Fließverbindung steht.

8. Kraftfahrzeug nach Anspruch 7, dadurch gekennzeichnet, daß die Rotorwelle (17) an ihrem in das Getriebegehäuse (21) hineinragenden Ende (77) ein Antriebsritzel (79) aufweist, welches über ein Zahnrad (81) mit dem Differenzialgetriebe in Drehverbindung steht.

9. Kraftfahrzeug nach Anspruch 8, dadurch gekennzeichnet, daß das Antriebsritzel (79) einstückig mit der Rotorwelle (17 ausgebildet ist.

10. Kraftfahrzeuge nach einem der vorhergehenden Ansprüche, dadurch gekennzeichnet, daß die einerseits in der Rotorwelle (17) gelagerte Abtriebswelle (25), andererseits in einem Nadellager (43) in Nähe des Differentialgetriebes in dem Getriebegehäuse (21) gelagert ist.

11. Kraftfahrzeuge nach einem der vorhergehenden Ansprüche, dadurch gekennzeichnet, daß die Lagerschilde (9, 11) und das Mantelgehäuse (83) des Motorgehäuses (3) Verbindungs- (85) und Umklenkkanäle (87) für Kühlwasser aufweisen.
